# EUROPEAN PATENT SPECIFICATION

(11) **EP 1 697 174 B1**
(45) Date of publication and mention of the grant of the patent: **05.03.2008**
(21) Application number: 04798348.1
(22) Date of filing: 01.11.2004
(51) Int. Cl.: B60R 16/00, H01H 25/00, B60R 1/07, E05F 15/16, B60K 37/00

(54) **SWITCH ARRANGEMENT**
SCHALTANORDNUNG
ENSEMBLE DE COMMUTATEURS

(30) Priority: 30.10.2003 GB 0325680
(43) Date of publication of application: 06.09.2006
(73) Proprietor: Nissan Motor Manufacturing (UK) Ltd., Bedfordshire MK43 0DB (GB)
(72) Inventor: KEENAN, Patrick, Nissan Technical Ctr. Europe Ltd., Bedfordshire MK43 0DB (GB)
(74) Representative: Holmes, Matthew William
(86) International application number: PCT/GB2004/004615
(87) International publication number: WO 2005/044631

(56) References cited:
- DE-A1- 19 906 531
- FR-A- 2 828 707
- US-B1- 6 198 175

## Description

The present invention relates to a switch arrangement and particularly, but not exclusively, to a switch arrangement for controlling the operation of two or more electrically operable devices. The invention finds particular application in the controlling and/or operation of electric windows and electric wing mirrors of a vehicle such as an automobile.

Many modem vehicles such as automobiles are provided with electrically operable windows and/or electrically adjustable wing mirrors. Whilst some vehicles are provided with electrically operable front windows only, the rear windows being operated by means of a manual winding mechanism, it is becoming more common for all four windows in the vehicle to be electrically operable. In addition, the wing mirrors of many vehicles can also be adjusted electrically. It is with such fully equipped vehicles that the present invention is particularly, although not exclusively, concerned.

It is known to provide a respective switch adjacent each electrically operable window for controlling the operation thereof. In addition, a switch arrangement, accessible by the driver of the vehicle, is often provided to permit the driver to operate each window individually. Specifically, a cluster or "bank" of four individual switches may be provided in the centre console of the vehicle or, more commonly, on an armrest located on the inside of the driver's door.

Since four individual switches are required in the switch arrangement in order to permit operation of all four windows in the vehicle, the cost of providing this facility for the driver is relatively expensive. Furthermore, the switch arrangement is frequently physically large which reduces the space available for the provision of switches for controlling other functions on the vehicle.

In addition to the switch arrangement for controlling the electrically operable windows, many vehicles are also provided with a second switch arrangement for adjusting the positions of electrically adjustable wing mirrors. In this case, the vehicle may be provided with a multi-way, joystick-type switch having a knob which is rotatable into two or three latched positions, each position representing selection of the left hand wing mirror, the right hand wing mirror or an intermediate, off position, respectively, and which can then be moved into a plurality of positions in two dimensions to effect adjustment of the selected wing mirror.

Alternatively, a two-switch arrangement may be provided. In this case, a first switch, which may be a rotary switch or a slider-type switch is movable into three latched positions representing selection of the left hand wing mirror, the right hand wing mirror or an intermediate, off position, respectively. A second, multi-way, rocker-type switch is movable into four non-latched positions in two dimensions to effect adjustment of the selected wing mirror.

The switch arrangement may be positioned at any location that is easily accessible by the driver of the vehicle, such as on the instrument panel, on the centre console or on an arm rest of the driver's door. Again, however, the cost of providing a separate switch for this function is relatively high.

US-B1-6 198 175 discloses a switching device and process for external force-actuated driving devices in a motor vehicle according to the preamble of claim 1, especially windows and sliding roofs.

It is an aim of the present invention to provide a switch arrangement which permits both operation of a set of electrically operable windows of the vehicle and adjustment of a pair of electrically adjustable wing mirrors.

According to one aspect of the present invention, therefore, there is provided a switch arrangement for controlling the operation of a plurality of electrically operable devices, the switch arrangement comprising first and second switches, each switch being operable between a plurality of switch states, the arrangement being such that: i) actuation by movement of the first switch operates a first one of said electrically operable devices when the second switch is in a first predetermined position; and ii) actuation by movement of the second switch operates a second one of said electrically operable devices when the first switch is in a first predetermined position; and characterized in that the second switch is movable to a first, latched position thereof so as to select a first one of said electrically operable devices, movement of the first switch thereafter effecting operation of the first electrically operable device.

In one embodiment, the first switch is movable to a first, latched position, wherein a second one of said electrically operable devices is selected, movement of the second switch thereafter effecting operation of the second electrically operable device.

In one embodiment, the second switch is movable into at least two latched positions thereby to select a respective one of a first set of electrically operable devices, movement of the first switch thereafter effecting operation of the selected device in the first set of electrically operable devices.

In one embodiment, the first switch is movable into at least two latched positions thereby to select a respective one of a second set of electrically operable devices, movement of the second switch thereafter effecting operation of the selected device in the second set of electrically operable.

The first set of electrically operable devices may comprise a plurality of electrically operable windows of a vehicle. The second set of electrically operable devices may comprise a pair of electrically adjustable wing mirrors of a vehicle.

Each of the first and second switches may be multi-way switches, movable into a plurality of latched positions and/or a plurality of non-latched positions. In one embodiment, one or both of the first and second switches comprises a joystick-type multi-way switch.

Each latched position of the switches may be achieved through mechanical latching means within the or each switch. Alternatively, each latched position of the switches may be achieved through electronic or logic state latching.

The switch arrangement may further comprise indication means for providing a visual indication of the state of the first and/or second switch.

According to another aspect of the present invention there is provided a vehicle electric window and wing mirror control system comprising a switch arrangement according to the first aspect of the invention and/or the described embodiments.

According to a third aspect of the invention, there is provided a vehicle having a switch arrangement or a control system of the first and second embodiments.

The invention advantageously provides a switch arrangement having only two switches which allows all four electrically operable windows and two electrically operable wing mirrors to be operated and/or adjusted. By employing only two switches, the space required to mount the switch arrangement is reduced, as is the cost.

The present invention will now be described, by way of example only, with reference to the accompanying drawings in which:
Figure 1 illustrates a known switch arrangement for operating a pair of electric wing mirrors of a vehicle;
Figure 2 illustrates a known switch arrangement for operating a set of electric windows of a vehicle;
Figure 3 illustrates schematically a switch arrangement according to one aspect of the present invention; and
Figure 4 is a block schematic diagram illustrating a control system incorporating the switch arrangement of Figure 3.

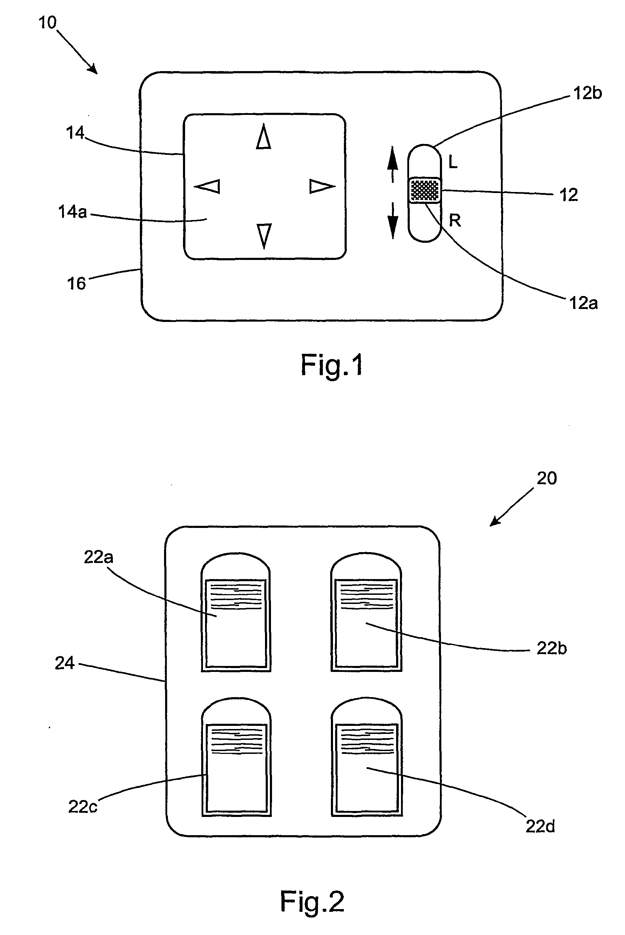

Referring firstly to figure 1, a first known form of switch arrangement for a vehicle, such as an automobile, is shown generally at 10. The switch arrangement 10 is arranged for controlling and/or adjusting a pair of electrically operable wing or door mirrors of the vehicle (not shown) and comprises two multi-way switches 12, 14 mounted on a panel 16. The panel 16 is adapted for mounting at a suitable location within the vehicle such as the instrument panel, the centre console or an arm rest disposed on the inside of the driver's door, and is generally formed from a rigid plastics material which provides an aesthetically pleasing finish when installed in the vehicle.

The first switch 12 of the arrangement 10 comprises a slider-type switch having a knob 12a slidably mounted within a track 12b disposed in the panel 16. The knob 12a is movable linearly within the track 12b into three latched positions: an upper position, an intermediate position (as illustrated) and a lower position. Movement of the knob 12a into the upper position selects the left hand door mirror whilst movement into the lower position selects the right hand door mirror. The intermediate position is an "off' position in which neither of the door mirrors are selected.

The second switch 14 of the arrangement 10 comprises a rocker-type switch having a generally square rocker pad 14a mounted on the panel 16. The pad 14a is movable in two dimensions, through the application of pressure thereto, into four non-latched positions, each position representing a corresponding movement of the respective door mirror.

The switch arrangement 10 is operable to control a pair of electrically operable wing mirrors located on opposite sides of the vehicle. The wing mirrors (not shown) can be tilted in three dimensions, firstly by pitching about a generally horizontal axis extending laterally across the vehicle and, secondly, yawed about a substantially vertical axis. This range of movement of the wing mirror allows the driver and/or passenger to adjust the view to the sides and/or the rear of the vehicle therefrom.

Operation of the switch arrangement 10 is as follows: in order to adjust, for example, the left hand wing mirror, the knob 12a of the first switch 12 is moved upwardly from the intermediate, off position to the upper position wherein the left hand wing mirror is selected. Since the upper position is a latched position, the knob 12a remains in this position even when released by the user. Thereafter, the pad 14a can be rocked vertically or horizontally, into the four orthogonal, non-latched positions, by means of pressure applied thereto, thereby to cause corresponding pivoting and/or yawing movement of the left hand wing mirror as desired.

Downward sliding movement of the knob 12a causes the knob 12a to re-adopt the intermediate, off position as shown in Figure 1. In this intermediate position, neither the left nor the right hand wing mirrors is selected and subsequent movement of the pad 14a does not cause any movement of the left or right hand wing mirrors. It will be appreciated that some prior art systems do not provide this intermediate, off position.

Further downward sliding movement of the knob 12a causes the knob to enter the lower latched position wherein the right hand wing mirror is selected. Since the lower position is a latched position, the knob 12a remains in this position even when released by the user. Thereafter, the pad 14a can be rocked vertically or horizontally, into the four orthogonal, non-latched positions, by means of pressure applied thereto, thereby to cause corresponding pivoting and/or yawing movement of the right hand wing mirror as desired.

Adjustment of each wing mirror can therefore be achieved independently firstly by sliding the knob 12a from the intermediate, off position to either a first latched position (the upper position) wherein the left hand wing mirror is selected, or to a second latched position (the lower position) wherein the right hand wing mirror is selected and thereafter rocking the pad 14a either vertically or horizontally to cause corresponding movement of the selected mirror.

Referring now to Figure 2, this illustrates a second known form of switch arrangement. The second switch arrangement, shown generally at 20, is arranged for controlling up to four electrically operable windows of a vehicle (not shown) and consists of four separate rocker-type switches 22a - 22d mounted in a panel 24. As in the case of panel 16, the panel 24 is adapted for mounting at a suitable location within the vehicle such as the centre console or an arm rest disposed on the inside of the driver's door, and is generally formed from a rigid plastics material which provides an aesthetically pleasing finish when installed in the vehicle.

Each switch 22a - 22d is mounted in the panel for rocking or pivoting movement about an intermediate position to which the switch is resiliently biased. Each switch can be selectively moved into first and second unlatched, operative positions from the intermediate position, the latter representing a non-operative or off position.

Each switch 22a - 22d controls the operation of a respective electrically operable window of the vehicle. In the illustrated arrangement of Figure 2, the switch 22a operates the front left hand window of the vehicle, the switch 22b operates the front right hand window, the switch 22c operates the left rear window and the switch 22d operates the rear right hand window.

In use, to lower, for example, the front left hand window of the vehicle, the switch 22a is depressed (pivoted) from the intermediate off position into a first unlatched position which causes the front left hand window to lower. The control system and mechanism which achieves this functionality will be well understood by those skilled in the art and is not therefore described in detail herein.

When the switch 22a is released, it moves from the first unlatched position into the intermediate, off position, to which it is resiliently biased. Unlike the slider switch 12 of Figure 1, the switch 22a does not remain latched in the first position when released but returns to the intermediate, off position.

In order to raise the front left hand window from the lowered position, the switch 22a is pulled (pivoted) upwardly into a second, non-latched position which causes the front left hand window to be raised. The switch 22a is held in the second position until the window has reached the desired position or is fully raised. Again, when the switch 22a is released, it returns to the intermediate, off position to which it is resiliently biased.

Operation of the remaining electrically operable windows in the vehicle is achieved by similar operation of the respective switches 22b - 22d.

Many vehicles are provided with both types of switch arrangement. As described above, these arrangements require five or six switches to enable the operation and/or adjustment of the electric windows and electric wing mirrors of the vehicle. There is little or no integration between the switches and the switch arrangements are frequently located at different positions within the vehicle. Moreover, the provision of this number of separate switches is costly and takes up excessive space within the vehicle.

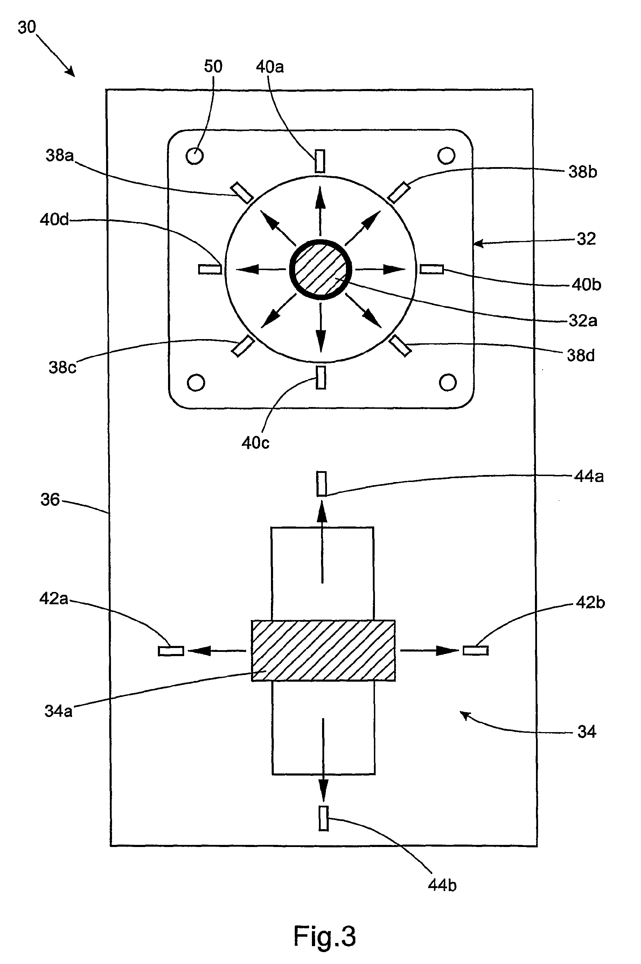

Referring now to figure 3, a first form of switch arrangement according to the invention is shown generally at 30. The switch arrangement 30 comprises first and second switches 32, 34 which are mounted within a panel 36.

The first switch 32 comprises a multi-way, joystick-type switch which is movable into a plurality of positions. In the illustrated embodiment, the joystick 32a is movable in two dimensions into 8 discreet positions from a central, off position. Four of these positions, indicated by reference numerals 38a - 38d, selected by movement of the joystick in one of four diagonal directions, are latched positions; that is to say movement of the joystick 32a into one of these positions causes the switch to latch into that position such that it remains in the latched position after release.

The remaining four positions, denoted by reference numerals 40a - 40d selected by movement of the joystick in either a vertical direction or a horizontal position, are unlatched positions; that is to say the joystick 32a will not remain in any of the positions 40a - 40d once released.

The switch arrangement 30 also comprises a second switch 34 having a knob 34a which is movable into a plurality of positions. In the illustrated embodiment, the second switch 34 is a combined rocker- and slider-type switch which is movable, in two dimensions, into four positions - two latched positions and two unlatched positions - from a central, off position.

More specifically, the second switch 34 is movable in a generally horizontal direction into first and second latched positions. Movement of the knob 34a to the left causes the second switch 34 to enter the first latched position, denoted by reference numeral 42a. Since the position 42a is a latched position, the knob 34a remains in this position even when released by the user. Once moved out of the first position 42a by the user, the knob 34a adopts the central, off position to which it is resiliently biased.

Movement of the knob 34a to the right causes the second switch 34 to enter the second latched position, denoted by reference numeral 42b. Since the position 42b is a latched position, the knob 34a remains in this position even when released by the user. Once moved out of the second position 42b by the user, the knob 34a adopts the central, off position to which it is resiliently biased.

The second switch 34 is also movable, in a vertical direction, from the central, off position into first and second unlatched positions. More specifically, movement of the knob 34a upwardly (in the drawing) causes the switch 34 to enter the first unlatched position, denoted by reference numeral 44a. Since the position 44a is an unlatched position, the knob 34a is not retained in this position once released by the user. Instead, on release the switch moves to the central, off position to which it is resiliently biased.

Movement of the knob 34a downwardly causes the switch 34 to enter the second unlatched position, denoted by reference numeral 44b. Since the position 44b is an unlatched position, the knob 34a is not retained in this position once released by the user. Instead, on release the switch moves to the central, off position to which it is resiliently biased.

Operation of the switch arrangement of figure 3 will now be described. This description assumes that the switches 32, 34 are initially in the intermediate or central, off positions.

In order to lower, for example, the front left window of the vehicle, the joystick 32a of the first switch 32 is moved diagonally into the first latched position 38a. Because position 38a is a latched position, the joystick 32a remains in that position once released. This movement of the first switch 32 to the position 38a causes selection of the front passenger side window.

Thereafter, the knob 34a of the second switch 34 is moved downwardly towards the second, unlatched position 44b. Movement of the second switch 34 to the position 44b causes the selected (front left) window to lower. Because the position 44b is an unlatched position, the knob 34a must be held in that position until the selected window is lowered to the desired position. On release of the knob 34a, the second switch 34 returns to the central, off position, towards which it is biased such that the selected window is no longer operated (though still being selected by virtue of the first switch 32.) If no further operation of the vehicle windows is required, the first switch 32 can be moved out of the latched position 38a and into the central, off position.

In order to raise the selected window, the joystick 32a is again moved to the latched position 38a (unless it was left in that position following the lowering operation of the window) and the knob 34a of the second switch 34 is moved upwardly to the first unlatched position 44a thereof. This combination of movements of the two switches 32, 34 causes the selected (left front) window to be raised, the knob 34a of the second switch being held in the unlatched position 44a until the window has been raised to the desired level.

Operation of the other windows in the vehicle is achieved in a similar way. More specifically, the joystick 32a of the first switch 32 is moved diagonally into the latched position 38a - 38d corresponding to the desired window, thereby to select the window, and the knob 34a of the second switch is then moved into, and held in, the first or second unlatched positions 44a, 44b in order to effect the desired movement of the selected window.

On the other hand, in order to adjust, for example, the left hand wing mirror, the knob 34a of the second switch 34 is moved to the left such that it enters the first, latched position 42a. Movement of the second switch to the position 42a selects the left hand wing mirror, the switch remaining in that position on release of the knob 34a. Thereafter movement of the joystick 32a of the first switch 32 in a vertical or horizontal direction, i.e. into the unlatched positions 40a - 40d cause the position of the selected mirror to be adjusted as described above.

On release of the joystick 32a, the switch 32 returns to its central, off position to which it is biased so that the selected mirror is no longer adjusted. The knob 34a of the second switch 34 can then be moved back to its central, off position.

Adjustment of the right hand wing mirror is achieved in a similar manner. Here the knob 34a of the second switch is moved to the right, into the second latched position 42b, thereby to select the right hand wing mirror, and thereafter the joystick 32a of the first switch 32 is moved between the unlatched positions 40a - 40d thereby to adjust the position of the right hand mirror.

The present inventor has identified the heretofore unrealised principle that an inverse matrix exists between the operation of the electric windows and electric wing mirrors. That is to say that many vehicles have four electric windows, each requiring movement in two directions, and two wing mirrors each requiring movement in four directions. This realisation has led to the development of an integrated switch arrangement which allows the control of all of the devices on the vehicle using a minimum number of switches.

It will be appreciated that a number of variations and/or improvements can be made to the invention and that the described embodiments are not intended to be limiting.

For example, the switches 32, 34 can take any suitable form provided that the required number of positions is achievable. Preferably, at least one of the switches is able to move into eight discreet positions, of which at least four are latched, and the other of the switches is able to move into at least four positions, of which at least two are latched. It is, however, quite possible for all of the positions for both switches to be latched or unlatched, this arrangement only compromising ease of operation and not functionality.

The term "latched" is not intended to be limited to mechanically latched switches. Whilst many switches do provide mechanical latching, it is envisaged that electronic or "state logic" switching means could be employed. For example, the first switch 32 could be mechanically unlatched in all eight positions, movement of the joystick 32a diagonally into one of the positions 38a- 38d causing selection of the corresponding window as described above.

On release, the joystick 32a returns to the central off position. However, the switch is electronically latched into the selected position by means of appropriate logic circuitry so that the selected window remains selected even when the joystick 32a itself returns to the central, off position. Indication means in the form of a number of LEDs 50, or other indicators, can be provided to indicate to the user the window that is currently selected.

This embodiment allows the simultaneous selection and operation of more than one window in the vehicle. For example, the user can move the joystick 32a from the central, off position diagonally into the position 38a, thereby selecting the front left window. The logic circuitry latches the switch 32 into the position 38a and the respective indicator or LED 50 is illuminated. The user is then able to move the joystick 32a from the position 38a, through the central, off position and diagonally into another position, for example the position 38b, thereby selecting the front right window. Again, the logic circuitry latches the switch 32 into position 38b even if the joystick 32a is released to return to the central, off position. Thereafter, the user can move the knob 34a of the second switch 34 into the second, unlatched position 44b thereof, thereby to lower the selected windows simultaneously.

Inadvertent selection of a window can be cancelled by releasing the joystick 32a, such that it returns to the central, off position and then moving the joystick back to the inadvertently selected position. This second movement into the previously selected position causes the logic circuitry to unlatch the switch at that position, thereby deselecting the inadvertently selected window.

In one embodiment, once the operation of the desired window or windows has been completed, the first switch automatically unlatches. In another embodiment, the first switch is not unlatched until the user moves the joystick 32a again into the previously selected positions.

Similarly, electronic latching of the second switch can be employed, thereby allowing the use of a non-mechanically latched switch. Again, indicators can be employed to indicate which wing mirror is selected and again both wing mirrors can be simultaneously selected by the second switch 34 and subsequently adjusted by movement of the first switch 32. The second switch 34 can take any appropriate form, including that of the first switch 32.

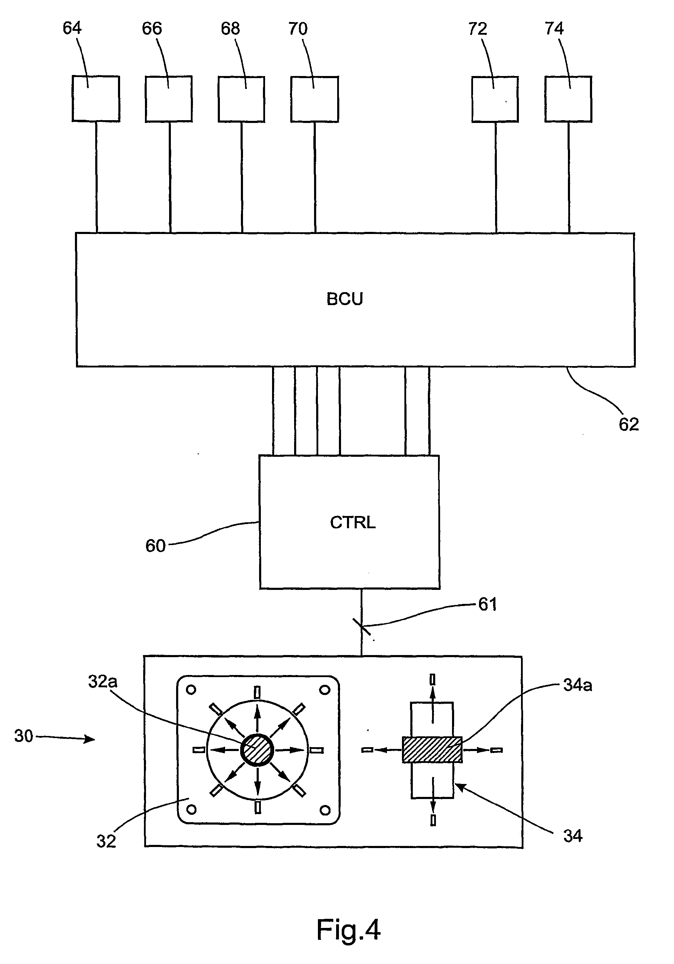

Referring to Figure 4, this illustrates an example of a control system incorporating the switch assembly of the invention. In many vehicles, operation or adjustment of the wing mirrors and electric windows is controlled by means of a Body Control Unit (BCU). Each of the switches provided for operating the electrical devices is connected to a respective input of the BCU 62. The BCU 62 is also connected to the various actuators or drivers, such as electric motors or solenoid actuators, via relays where necessary, used to move the electrical devices.

In the embodiment of Figure 4, the switch arrangement 30 has a plurality of outputs, for example one output for each position of the switches 32, 34, which are connected to inputs of a logic controller or processor 60 via a single- or multi-core cable 61. The logic controller 60 has a plurality of outputs, each of which is connected to a respective input of the BCU 62, in the manner of the conventional system described in the preceding paragraph.

Movement of the switches 32, 34 into various positions, as described above, causes electrical signals to be applied to the inputs of the logic controller 60. The logic controller 60 processes these signals and generates the appropriate signal to be applied to the BCU 62 in order to effect operation of the selected device. The BCU 62 processes the signal received from the logic controller 60 and applies an activating signal to the relevant driver or relay 64 - 74, thereby to operate the selected device.

The logic controller 60 may be integral with the switch arrangement 30 or with the BCU 62. Alternatively, as shown, the logic controller may be a separate unit.

Where the vehicle is not provided with a BCU or equivalent, the logic controller 60 may be connected directly to the drivers or relays 64 - 74 for direct control thereof.

It is also envisaged that in other embodiments of the invention, the first and second switches 32, 34 may be actuable by means other than movement, for example by passing an electrical current through the switch, or by application of a pressure or temperature change.

The present invention provides a switch arrangement which, in one embodiment, allows for the control of both the electric windows and the electric wing mirrors of a vehicle whilst using only two switches. This has the benefit of reducing both production cost and the space taken up within the vehicle by the arrangement.

## Claims

1. A switch arrangement (30) for controlling the operation of a plurality of electrically operable devices, the switch arrangement (30) comprising first and second switches (32,34), each switch being operable between a plurality of switch states (42a, 42b, 44a, 44b; 38a-38d, 40a-40d), the arrangement being such that:
i) actuation by movement of the first switch (32) operates a first one of said electrically operable devices when the second switch (34) is in a first predetermined position (42a); and
ii) actuation by movement of the second switch (34) operates a second one of said electrically operable devices when the first switch (32) is in a first predetermined position (38a); and **characterized in that**
the second switch (34) is movable to a first, latched position (42a) thereof so as to select a first one of said electrically operable devices, movement of the first switch (32) thereafter effecting operation of the first electrically operable device.

2. An arrangement as claimed in claim 1, wherein the first switch (32) is movable to a first, latched position (38a) thereof so as to select a second one of said electrically operable devices, movement of the second switch (34) thereafter effecting operation of the second electrically operable device.

3. An arrangement as claimed in claim 1 or claim 2, wherein the second switch (34) is movable into at least two latched positions (42a, 42b) thereof, thereby to select a respective one of a first set of electrically operable devices, movement of the first switch (32) thereafter effecting operation of the selected device from the first set of electrically operable devices.

4. An arrangement as claimed in any one of claims 1 to 3, wherein the first switch (32) is movable into at least two latched positions (38a-38d) thereof, thereby to select a respective one of a second set of electrically operable devices, movement of the second switch (34) thereafter effecting operation of the selected device in the second set of electrically operable devices.

5. An arrangement as claimed in claim 4, wherein the second set of electrically operable devices comprises a pair of electrically adjustable wing mirrors of a vehicle.

6. An arrangement as claimed in any one of claims 3 to 5, wherein the first set of electrically operable devices comprises a plurality of electrically operable windows of a vehicle.

7. An arrangement as claimed in any one of the preceding claims, wherein one or both of the first and second switches (32,34) is movable into a plurality of latched positions (38a-38d, 42a, 42b) and/or a plurality of non-latched positions (40a- 40d,44a, 44b).

8. An arrangement as claimed in claim 7, wherein one or both of the first and second switches (32,34) comprises a multi-way switch for moving the first and second switches (32,34) into the plurality of latched positions (38a-38d; 42a, 42b) and/or the plurality of non-latched positions (40a-40d, 44a, 44b).

9. An arrangement as claimed in claim 8, wherein one or both of the first and second switches (32,34) comprises a joystick-type multi-way switch.

10. An arrangement as claimed in one of claims 7 to 9, further comprising mechanical latching means within one or more of the first and second switches (32,34) for achieving the latched positions(38a-38d ; 42a, 42b) thereof.

11. An arrangement as claimed in any one of claims 7 to 9, further comprising electronic or logic state latching means .for achieving the latched positions (38a-38d ; 42a, 42b) thereof.

12. An arrangement as claimed in any one of claims 1 to 11, further comprising indication means (50) for providing a visual indication of the state (38a-38d ; 42a, 42b) of the first and/or second switch (32,34).

13. An arrangement as claimed in claim 12, wherein the indication means includes a light emitting diode (50), or the like.

14. A control system for controlling a set of electric windows and a pair of wing mirrors of a vehicle comprising a switch arrangement (30) according to any one of the preceding claims.

15. A vehicle having a switch arrangement or a control system as claimed in any one of the preceding claims.

## Patentansprüche

1. Schalteranordnung (30) zum Steuern der Betätigung von mehreren elektrisch betätigbaren Einrichtungen, wobei die Schalteranordnung (30) einen ersten und einen zweiten Schalter (32, 34) umfasst, wobei jeder Schalter zwischen mehreren Schaltzuständen (42a, 42b, 44a, 44b; 38a - 38d, 40a - 40d) betätigt werden kann, wobei die Anordnung derart ist, dass
i) eine Betätigung durch eine Bewegung des ersten Schalters (32) eine erste der elektrisch betätigbaren Einrichtungen betätigt, wenn sich der zweite Schalter (34) in einer ersten vorbestimmten Position (42a) befindet; und
ii) eine Betätigung durch eine Bewegung des zweiten Schalters (34) eine zweite der elektrisch betätigbaren Einrichtungen betätigt, wenn sich der erste Schalter (32) in einer ersten vorbestimmten Position (38a) befindet; und **dadurch gekennzeichnet, dass**
der zweite Schalter (34) in eine erste Rastposition (42a) davon bewegt werden kann, um eine erste der elektrisch betätigbaren Einrichtungen auszuwählen, wobei eine Bewegung des ersten Schalters (32) danach eine Betätigung der ersten elektrisch betätigbaren Einrichtung bewirkt.

2. Anordnung nach Anspruch 1, wobei der erste Schalter (32) in eine erste Rastposition (38a) davon bewegt werden kann, um eine zweite der elektrisch betätigbaren Einrichtungen auszuwählen, wobei eine Bewegung des zweiten Schalters (34) danach eine Betätigung der zweiten elektrisch betätigbaren Einrichtung bewirkt.

3. Anordnung nach Anspruch 1 oder 2, wobei der zweite Schalter (34) in mindestens zwei Rastpositionen (42a, 42b) davon bewegt werden kann, um **dadurch** eine jeweilige eines ersten Satzes von elektrisch betätigbaren Einrichtungen auszuwählen, wobei eine Bewegung des ersten Schalters (32) danach eine Betätigung der ausgewählten Einrichtung aus dem ersten Satz von elektrisch betätigbaren Einrichtungen bewirkt.

4. Anordnung nach einem der Ansprüche 1 bis 3, wobei der erste Schalter (32) in mindestens zwei Rastpositionen (38a - 38d) davon bewegt werden kann, um **dadurch** einen jeweiligen eines zweiten Satzes von elektrisch betätigbaren Einrichtungen auszuwählen, wobei eine Bewegung des zweiten Schalters (34) danach eine Betätigung der ausgewählten Einrichtung in dem zweiten Satz von elektrisch betätigbaren Einrichtungen bewirkt.

5. Anordnung nach Anspruch 4, wobei der zweite Satz von elektrisch betätigbaren Einrichtungen ein Paar von elektrisch betätigbaren Außenspiegeln eines Fahrzeugs umfasst.

6. Anordnung nach einem der Ansprüche 3 bis 5, wobei der erste Satz von elektrisch betätigbaren Einrichtungen mehrere elektrisch betätigbare Fenster eines Fahrzeugs umfasst.

7. Anordnung nach einem der vorhergehenden Ansprüche, wobei einer oder beide des ersten und zweiten Schalters (32, 34) in mehrere Rastpositionen (38a - 38d, 42a, 42b) und/oder mehrere Nicht-Rastpositionen (40a - 40d, 44a, 44b) bewegt werden kann.

8. Anordnung nach Anspruch 7, wobei einer oder beide des ersten und zweiten Schalters (32, 34) einen Mehrwegeschalter zum Bewegen des ersten und zweiten Schalters (32, 34) in die mehreren Rastpositionen (38a - 38d; 42a, 42b) und/oder die mehreren ungerastete Positionen (40a - 40d, 44a, 44b) umfasst.

9. Anordnung nach Anspruch 8, wobei einer oder beide des ersten und zweiten Schalters (32, 34) einen Mehrwegeschalter vom Joysticktyp umfasst.

10. Anordnung nach einem der Ansprüche 7 bis 9, weiterhin umfassend mechanische Rastmittel innerhalb eines oder mehrerer des ersten und zweiten Schalters (32, 34) zum Erzielen der Rastpositionen (38a - 38d; 42a, 42b) davon.

11. Anordnung nach einem der Ansprüche 7 bis 9, weiterhin umfassend Elektronik- oder Logikzustandsrastmittel zum Erzielen der Rastpositionen (38a- 38d; 42a, 42b) davon.

12. Anordnung nach einem der Ansprüche 1 bis 11, weiterhin umfassend Anzeigemittel (50) zum Bereitstellen einer Sichtanzeige des Zustands (38a - 38d; 42a, 42b) des ersten und/oder zweiten Schalters (32, 34).

13. Anordnung nach Anspruch 12, wobei das Anzeigemittel eine Leuchtdiode (50) oder dergleichen umfasst.

14. Steuersystem zum Steuern eines Satzes von elektrischen Fenstern und eines Paares von Außenspiegeln eines Fahrzeugs, umfassend eine Schalteranordnung (30) nach einem der vorhergehenden Ansprüche.

15. Fahrzeug mit einer Schalteranordnung oder einem Steuersystem nach einem der vorhergehenden Ansprüche.

## Revendications

1. Ensemble de commutateurs (30) pour commander l'actionnement d'une pluralité de dispositifs actionnables électriquement, l'ensemble de commutateurs (30) comprenant des premier et second commutateurs (32, 34), chaque commutateur étant actionnable entre une pluralité d'états de commutation (42a, 42b, 44a, 44b ; 38a à 38d, 40a à 40d), l'ensemble étant tel que :
i) le déplacement du premier commutateur (32) actionne un premier desdits dispositifs actionnables électriquement quand le second commutateur (34) se trouve dans une première position prédéterminée (42a) ; et
ii) le déplacement du second commutateur (34) actionne un second desdits dispositifs actionnables électriquement quand le premier commutateur (32) se trouve dans une première position prédéterminée (38a) ; et **caractérisé en ce que**
le second commutateur (34) est déplaçable sur une première position verrouillée (42a) de celui-ci de façon à sélectionner un premier desdits dispositifs actionnables électriquement, un déplacement du premier commutateur (32) après cela actionnant le premier dispositif actionnable électriquement.

2. Ensemble de commutateurs selon la revendication 1, dans lequel le premier commutateur (32) est déplaçable sur une première position verrouillée (38a) de celui-ci de façon à sélectionner un second desdits dispositifs actionnables électriquement, le déplacement du second commutateur (34) après cela actionnant le second dispositif actionnable électriquement.

3. Ensemble de commutateurs selon la revendication 1 ou 2, dans lequel le second commutateur (34) est déplaçable sur au moins deux positions verrouillées (42a, 42b) de celui-ci, pour ainsi sélectionner un dispositif respectif d'un premier ensemble de dispositifs actionnables électriquement, le déplacement du premier commutateur (32) après cela actionnant le dispositif sélectionné dans le premier ensemble de dispositifs actionnables électriquement.

4. Ensemble de commutateurs selon l'une quelconque des revendications 1 à 3, dans lequel le premier commutateur (32) est déplaçable sur au moins deux positions verrouillées (38a à 38d) de celui-ci, pour ainsi sélectionner un dispositif respectif d'un second ensemble de dispositifs actionnables électriquement, le déplacement du second commutateur (34) après cela actionnant le dispositif sélectionné dans le second ensemble de dispositifs actionnables électriquement.

5. Ensemble de commutateurs selon la revendication 4, dans lequel le second ensemble de dispositifs actionnables électriquement comprend une paire de rétroviseurs d'aile de véhicule réglables électriquement.

6. Ensemble de commutateurs selon l'une quelconque des revendications 3 à 5, dans lequel le premier ensemble de dispositifs actionnables électriquement comprend une pluralité de vitres de véhicule actionnables électriquement.

7. Ensemble de commutateurs selon l'une quelconque des revendications précédentes, dans lequel un des premier et second commutateurs (32, 34) ou les deux peuvent être déplacés sur une pluralité de positions verrouillées (38a à 38d, 42a, 42b) et/ou une pluralité de positions non verrouillées (40a à 40d, 44a, 44b).

8. Ensemble de commutateurs selon la revendication 7, dans lequel un des premier et second commutateurs (32, 34) ou les deux comprennent un commutateur multiposition pour déplacer les premier et second commutateurs (32, 34) sur la pluralité de positions verrouillées (38a à 38d, 42a, 42b) et/ou la pluralité de positions non verrouillées (40a à 40d, 44a, 44b).

9. Ensemble de commutateurs selon la revendication 8, dans lequel un des premier et second commutateurs (32, 34) ou les deux comprennent un commutateur multiposition du type à tige.

10. Ensemble de commutateurs selon l'une quelconque des revendications 7 à 9, comprenant en outre des moyens de verrouillage mécaniques dans un ou plusieurs des premier et second commutateurs (32, 34) pour établir les positions verrouillées (38a à 38d, 42a, 42b) de ceux-ci.

11. Ensemble de commutateurs selon l'une quelconque des revendications 7 à 9, comprenant en outre des moyens de verrouillage électroniques ou d'état logique pour établir les positions verrouillées (38a à 38d, 42a, 42b) de ceux-ci.

12. Ensemble de commutateurs selon l'une quelconque des revendications 1 à 11, comprenant en outre des moyens indicateurs (50) pour fournir une indication visuelle de l'état (38a à 38d, 42a, 42b) du premier et/ou second commutateur (32, 34).

13. Ensemble de commutateurs selon la revendication 12, dans lequel le moyen indicateur comporte une diode électroluminescente (50), ou assimilée.

14. Système de commande pour commander un ensemble de vitres électriques et une paire de rétroviseurs d'aile d'un véhicule comprenant un ensemble de commutateurs (30) selon l'une quelconque des revendications précédentes.

15. Véhicule ayant un ensemble de commutateurs ou un système de commande selon l'une quelconque des revendications précédentes.
